# EUROPEAN PATENT APPLICATION

(11) **EP 2 677 153 A1**
(43) Date of publication of application: **25.12.2013**
(21) Application number: 13171768.8
(22) Date of filing: 13.06.2013
(51) Int. Cl.: F02M 25/08, B01D 53/02

(54) **Canister**

(30) Priority: 21.06.2012 JP 2012139303
(71) Applicant: MAHLE Filter Systems Japan Corporation, Toshima-ku, Tokyo 170-0004 (JP)
(72) Inventor: Nakano, Masaru, Toshima-ku, Tokyo 170-0004 (JP); Hikita, Yuichi, Toshima-ku, Tokyo 170-0004 (JP); Matsuzawa, Naoki, Toshima-ku, Tokyo 170-0004 (JP)
(74) Representative: Grünecker, Kinkeldey, Stockmair & Schwanhäusser

(57) **Abstract**

A canister includes: a first adsorbent chamber; a second absorbent chamber connected to the first adsorbent chamber via a connection passage to constitute a U turn shaped flow passage; a casing having a charge port and a purge port at a terminal section of the first adsorbent chamber and having a drain port at a terminal section of the second adsorbent chamber; an adsorbent filled within the first and second adsorbent chambers; and an adsorption quantity sensor attached onto the casing to position a detection section of the sensor within the adsorbent, wherein a measurement point of the adsorption quantity sensor is arranged at a position nearer to a second terminal section of the second adsorbent chamber than an intermediate point of a flow passage length between a first terminal section at a drain port side of the second adsorbent chamber and the second terminal section at the connection passage side.

## Description

### BACKGROUND OF THE INVENTION

(1) Field of the Invention The present invention relates to a canister used in a vaporized fuel processing system for an automotive vehicle, particularly, relates to the canister having an adsorption quantity sensor detecting an actual adsorption quantity on a basis of a thermal capacity of an adsorbent.

(2) **Description of related art** As is well known, in the automotive vehicle using an engine, the vaporized fuel processing system with the canister as a main body is equipped, in order to suppress a discharge of vaporized fuel within a fuel tank to the atmosphere.

The canister is filled with the absorbent such as an activated carbon or so forth within a casing. While vaporized fuel is adsorbed onto the adsorbent generated within the fuel tank at a time of a vehicle stop, a fuel component is desorbed from the absorbent by means of the atmosphere at a time of an engine operation and is sucked into an intake air system of the engine.

A Japanese Patent Application First Publication No. 2010-106664 published on May 13, 2010 (which corresponds to a United States Patent No. 8,099,999 issued on January 24, 2012) discloses a previously proposed adsorption quantity sensor for detecting an adsorption quantity in the canister, in turn, a support quantity of the fuel component in the adsorbent, with the change in the thermal capacity of the adsorbent along with the adsorption of the fuel component (HC) in the canister utilizing such an adsorbent as described above taken into consideration.
A temperature sensitive element is used for the adsorption quantity sensor. A resistance value of the temperature sensitive element is varied in accordance with a temperature of the adsorption quantity sensor itself. When the temperature of the temperature sensitive element which is heat generated is reduced by being deprived of heat by means of the fuel component supported by the absorbent, the resistance value, namely, an electric current value is varied so that the support quantity of the fuel component in the adsorbent can be estimated on a basis of the variation of the electric current value.

### SUMMARY OF THE INVENTION

The above-described adsorption quantity sensor measures the thermal capacity with a locally one part of a relatively large quantity of absorbent filled in the canister as an object of measurement. Hence, it is necessary to truly correlate the variation in the adsorption quantity in the canister with the output value of the adsorption quantity sensor in the canister in order to represent, for example, a single adsorption quantity sensor as the adsorption quantity of the whole canister.

The inventors have eagerly and repeatedly studied the correlation from the above-described viewpoint and have determined that some factors to cause a large reduction in a detection accuracy (in other words, a reliability of the output value).

One of the causes is a presence of moisture in the atmosphere. An experiment has been made in which a measurement point of the adsorption quantity sensor is arranged at various different positions in a flow passage of the canister. When the measurement point is located at a point near to a drain port, moisture in the atmosphere is adsorbed onto the adsorbent in the same way as hydro carbon and this moisture increases the thermal capacity. Hence, it was determined that the reliability of the output value is, thus, reduced.

The other cause is a problem of an nonuniformity of a distribution of the adsorption quantity in a lateral cross section in a adsorbent chamber in which the adsorbent is filled. For example, in a case where the fuel component is adsorbed in the canister at a very slow pace, the distribution of the absorption quantity in the lateral cross section is relatively uniform. However, at a time of a supply of fuel, a quick flow of fuel vapor from the fuel tank to the canister occurs so that a quick adsorption of vapor fuel onto the canister and the adsorption quantity at each part of the lateral cross section becomes nonuniform.

The above-described Japanese Patent Application First Publication No. 2010-106664 teaches that two positions in a first adsorbent chamber in which a charge port and a purge port are equipped are exemplified from among two adsorbent chambers connected together in a letter U shape. However, these positions are not always optimal positions and cannot correctly represent the adsorption quantity of the whole canister. It is, hence, an object of the present invention to provide a canister having an adsorption quantity sensor which provides an optimal measurement point for the adsorption quantity of the canister and which gives a high detection accuracy of the adsorption quantity.

According to one aspect of the present invention, there is provided with a canister comprising: a first adsorbent chamber; a second absorbent chamber connected to the first adsorbent chamber via a connection passage to constitute a U turn shaped flow passage; a casing having a charge port and a purge port at a terminal section of the first adsorbent chamber and having a drain port at a terminal section of the second adsorbent chamber; an adsorbent filled within the first and second adsorbent chambers; and an adsorption quantity sensorattached onto the casing to position a detection section of the sensor within the adsorbent, wherein a measurement point of the adsorption quantity sensor is arranged at a position nearer to a second terminal section of the second adsorbent chamber than an intermediate point of a flow passage length between a first terminal section at a drain port side of the second adsorbent chamber and the second terminal sectionthereof at the connection passage side.

It is desirable that the above-described measurement point is arranged at a position within a range of 30 percents of the above-described flow passage length from the second terminal section.

In the above-described structure, when the fuel component is caused to flow within the canister at the time of the fuel supply, namely, at the time of the charge, the fuel component is caused to flow from the charge port of the first adsorbent chamber toward the drain port of the second adsorbent chamber terminal section (the first terminal section). On the contrary, at the time of the purge at which the purge of the fuel component is carried out, the atmosphere is caused to flow from the drain port and is caused to flow toward the purge port. Hence, as a distribution of the adsorption quantity (support quantity) along the elongated direction of the flow passage in the canister, the support quantity becomes increased as the position becomes nearer to the terminal section at the charge port and the purge port of the first adsorbent chamber and the support quantity becomes reduced as the position becomes nearer to the terminal section of the drain port of the second adsorbent chamber.

The atmosphere including moisture is caused to flow from the drain port within the canister and the support quantity of hydrocarbon on the adsorbent near to the drain port becomes reduced as described above. Hence, moisture is apt to be adsorbed as the position becomes nearer to the drain port in the second adsorbent chamber. It should be noted that hydrocarbon becomes easier to be adsorbed onto the adsorbent as compared with vapor. If moisture were adsorbed onto the adsorbent, moisture is easily desorbed If the fuel component is charged. Hence, in the second adsorbent chamber, a region relatively separate from the drain port, namely, a region nearer to the second terminal than the intermediate point becomes more advantageous.

The influence of moisture occurs even within the first adsorbent chamber. The connection passages connected in the U shaped (or U turn shape) configuration between the first adsorbent chamber and the second adsorbent chamber has a some degree of volume and moisture condensed in repetitions of exothermic reaction and endothermic reaction is included in the air. Hence, the influence of moisture becomes relatively large at a position near to the connection passage in the first adsorbent chamber (namely, a position relatively small support quantity of hydrocarbon).

On the other hand, in a case where the fuel component is abruptly caused to flow within the canister at a time of the supply of fuel, the fuel component is first introduced into the first adsorbent chamber and a quick charge within the first adsorbent chamber is carried out. Hence, the distribution of the adsorption quantity on the lateral cross section becomes easy to occur. On the other hand, since the fuel component is caused to flow into the second adsorbent chamber after the passage of the connection passage from the first adsorbent chamber. Hence, the distribution of the adsorption quantity on the lateral cross section becomes uniform.

Particularly, in many cases, with the support quantity distribution in the elongated direction described above taken into consideration, the lateral cross sectional area of second adsorbent changer at the drain port side is set to be smaller than the lateral cross sectional area of the first adsorbent chamber at the charge port side. In such a structure as described above, the distribution of the adsorption quantity in the lateral cross section of the second adsorbent chamber becomes more uniform than that of the first adsorbent chamber.

Hence, with the influence of moisture and the uniformity of the distribution of the adsorption quantity on the lateral cross section of each adsorbent chamber taken into consideration, a region of the second adsorbent chamber side and toward the connection passage side with respect to the connection passage side as a measurement point representing the adsorption quantity of the canister itself. Then, it is preferable to take a position more remote from the drain port, namely, the position nearer to the terminal section at the connection passage side.

It should be noted that the distribution of the adsorption quantity along with the elongate direction of the flow passage in canister 1 is as follows: As described before, the support quantity becomes gradually smaller as the position is moved from the terminal section at the charge port and purge port sides to the terminal section of the drain port. The above-described position of the measurement point becomes an intermediate position from the elongate direction of the flow passage and, in details, gives a preferable position from the above-described viewpoint.

It should also be noted that it is desirable for the detection section to be at least 5mm separate from a screen member having a ventilation characteristic and defining the second terminal section without excessively approaching to the connection passage. That is to say, since the above-described adsorption quantity sensor detects the thermal capacity, namely, the adsorption quantity on a basis of a temperature equilibrium when the heat generated up to an appropriate temperature. Thus, if the adsorption sensor becomes excessively near to the connection passage (in other words, if the thickness of the adsorbent layer to the connection passage is excessively thin), a thermal influence such as an external air other than the adsorbent or a casing is received and its accuracy is reduced.

One form of the present invention is such that, in addition to the adsorption quantity sensor mounted in the second adsorbent chamber as described above, a second adsorption quantity sensor may be installed in the first adsorption chamber. In this case, it is desirable to be disposed toward the first terminal section than the intermediate point in the flow passage length between the first terminal section at the charge port side of the first adsorbent chamber and the second terminal section at the connection passage side. That is to say, since the influence due to the adsorption of moisture is larger in the region near to the connection passage, the reliability of the output value is low. Hence, in a case where the measurement is made by means of two adsorption quantity sensors, it is preferable to select the region near to the charge port than the intermediate point of the second adsorbent chamber, as the measurement point of the second adsorbent chamber.

### BRIEF DESCRIPTION OF THE DRAWINGS

Fig. 1 is a system configuration view of a vaporized fuel processing system including a canister related to a first preferred embodiment according to the present invention.

Fig. 2 is a longitudinal cross sectional view at a second adsorbent chamber side of a canister shown in Fig. 1.

Fig. 3 is a cross sectional view cut way along a line A - A shown in Fig. 2.

Fig. 4 is a characteristic graph representing characteristics of output values at different measurement positions of the canister.

Fig. 5 is an explanatory view representing a position of the measurement point used in the experiment of Fig. 4.

Fig. 6 is a cross sectional view representing a second embodiment of the canister.

### DETAILED DESCRIPTION OF THE INVENTION

Hereinafter, a detailed description of preferred embodiments according to the present invention will be made with reference to the accompanied drawings.

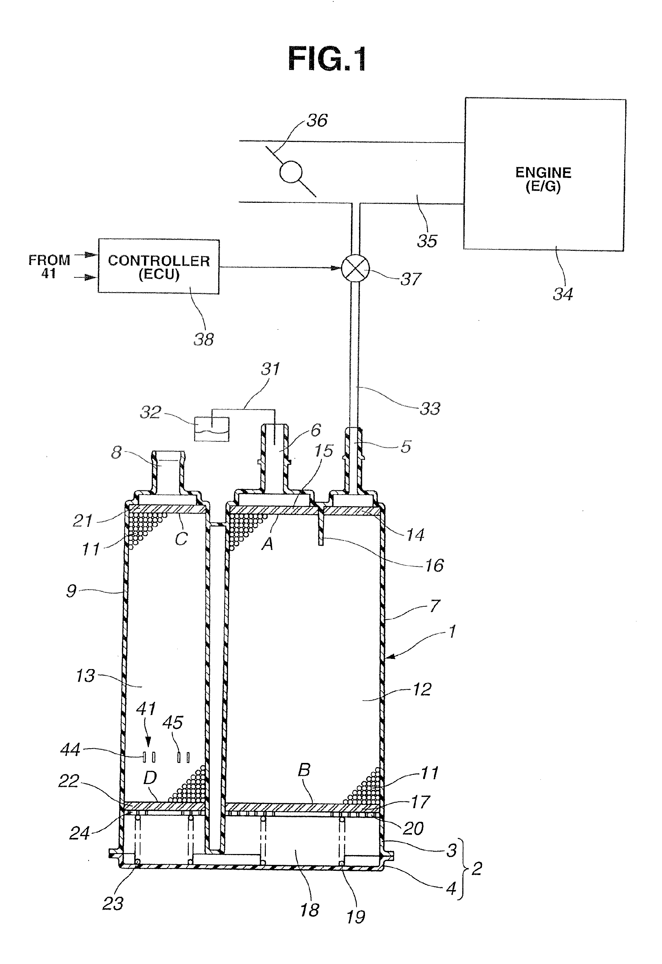

Fig. 1 shows a rough configuration view of a vaporized fuel processing system of a canister 1 according to the present invention. Canister 1 temporarily storing a fuel component is provided with a casing 2 made of a synthetic resin, casing 2 being constituted by a body 3 whose one end is opened and a cap structure 4 attached onto the opening end of this body 3.

Body 3 is provided with an elongated square tubular first cylindrical section 1 having one end section on which a purge port 5 and a charge port 6 are adjoined and an elongated square tubular second cylindrical section 9 having a drain port 8 at the end section of second cylindrical section 9. These two cylindrical sections 7, 9 are mutually adjoined via a slight gap and mutually integrally linked together. Other end sections of first cylindrical section 7 and second cylindrical section 9 are respectively opened. A connection passage 18 as will be described later is constituted by covering these openings by above-described cap structure 4.

An inside of first cylindrical section 7 is constituted by a first adsorbent chamber 12 in which granular adsorbents 11 (for example, activated carbon) which are capable of adsorbing or desorbing a fuel component (activated carbon) are filled. In details, a first screen member 14 having a ventilation characteristic and partitioning between the one end section of first cylindrical section 7 and purge port 5 and a second screen member 15 having the ventilation characteristic and partitioning between the one end section and the charge port 6 are disposed on one end section of first cylindrical section 7. In addition, a third screen member 17 is supported by a porous plate 20 having the ventilation characteristic. Third screen member 17 partitions between the other end section of first cylindrical section 7 and connection passage 18. A volume from among first and second screen members 14, 15 and third screen member 17 constitute first adsorbent chamber 12. Porous plate 20 having the ventilation characteristic and serves to support third screen member 17 and a spring 19 is disposed in a compression state between this porous plate 20 and a bottom surface of cap structure 4. A biasing force of this spring 19 causes adsorbent 11 within adsorbent chamber 12 to be held at a predetermined charged state.

It should be noted that a region of a terminal section of first adsorbent chamber 12 of first screen member 14 side (a region corresponding to purge port 5) at the terminal side of first absorbent chamber 12 and a region of second screen member 15 side (a region corresponding to charge port 6) are partitioned by means of a partitioning wall 16 projected from the terminal section of first cylindrical section 7.

An inside of second cylindrical section 9 provides second adsorbent chamber 13 in which adsorbents 11 are filled. In details, a fourth screen member 21 having the ventilation characteristic and a partitioning between the one end section of second cylindrical section 9 and drain port 8 and a fifth screen member 22 having the ventilation characteristic and partitioning between the one end section of second cylindrical section 9 and drain port 8 is provided. A volume between fourth and fifth screen members 21, 22 provides second adsorbent chamber 13. Fifth screen member 22 is supported by means of porous plate 24. A spring 23 is disposed in the compression state between porous plate 24 and a bottom surface of cap structure 4. The biasing force of third spring 23 causes adsorbent 11 within second adsorbent chamber 13 in a predetermined filled state.

A space defined between third screen chamber 17 and cap structure 4 and a space defined between fifth screen member 22 and bottom surface of cap structure 4 are mutually linked to form a single space. Thus, a connection passage 18 which serially connect between first and second adsorbent chambers 12, 13 with first and second cylindrical chambers 12, 13 as a flow passage. In other words, a space enclosed by third screen member 17, fifth screen member 22, and cap structure 4 provides connection passage 18.

Hence, as a whole canister 1, first adsorbent chamber 12 and second adsorbent chamber 13 are connected to constitute a flow passage in a U turn shape continued from purge port 5 and charge port 6 at one end section of the flow passage to drain port 8 at the other end of the flow passage via connection passage 18.

Charge port 6 is connected to an upper space section of a fuel tank 12 of the vehicle via a charge passage 31 and above-described purge port 5 is connected to an intake passage 35 of en engine 34 (E/G) (in more details, a downstream side of throttle valve 36) via a purge passage 33. A purge control valve 37 is intervened on purge control valve 37. An opening angle of purge control valve 37 is controlled by means of an engine control unit (engine controller or ECU) 38. In addition, drain port 8 is opened to the atmospheric pressure. However, there is often a case where an electromagnetic valve not shown is added to an atmospheric air passage connected to drain port 8 according to the necessity.

It should be noted that, in canister 1 described above, the volume of second adsorbent chamber 13 is about 1/2 the volume of first adsorbent chamber 12 and flow passage lengths of these chambers (lengths along the stream direction of gas) have no significant difference. Hence, a lateral cross section of second adsorbent chamber 13 (a passage of a cross section orthogonal to the stream direction of the gas) is about 1/2 of the lateral cross section of first adsorbent chamber 12. This is a consideration of the distribution of the adsorption quantity (support quantity) in a direction along the stream of gas described before. That is to say, as viewed from the elongated direction of the flow passage of gas, it is necessary to require a large quantity of adsorbent 11 relatively at the charge port side 6 and the quantity of required adsorbent 11 is relatively reduced. Hence, the passage cross sections are different between first adsorbent chamber 12 and second adsorbent chamber 13.

It should be noted that, as viewed from Fig. 1, height positions of first, second, and fourth screen members 14, 15, 21 are mutually equal to one another and third and fifth screen members 17, 22 are mutually equal to one another. However, the present invention is not limited to this. In a case where the height positions of first, second, and fourth screen members 14, 15, 21 are more or less different from one another, the present invention is applicable equally.

Next, adsorption quantity sensor 41 and its arrangement which are the essential part of the present invention will be described below. In order to identify the position in canister 1 for convenience, the terminal section defined by second screen member 15 of first adsorbent chamber 12 is called " terminal section A ", the terminal section defined by third screen member 17 of first adsorbent member 12 is called " terminal section B ", the terminal section defined by fourth screen member 17 of second adsorbent chamber 21, and the terminal section defined by fifth screen member 22 of second adsorbent chamber 13 is called " terminal section D", respectively.

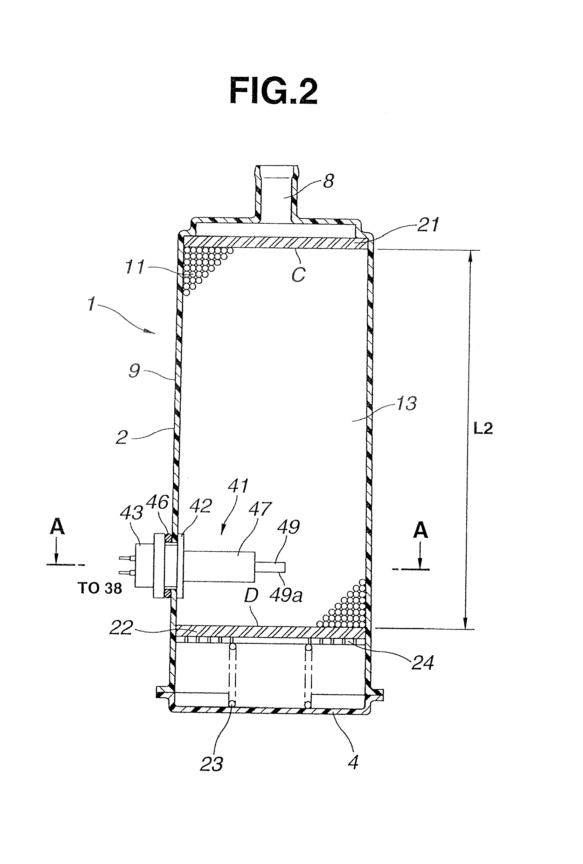

In this embodiment, as shown in Fig. 2, a single adsorption quantity sensor 41 installed in second adsorbent chamber 19 side represents the detection of the adsorption quantity of the whole canister 1. Particularly, adsorption quantity sensor 41 has a tip section measurement point disposed in a region directed toward terminal section D with respect to an intermediate point in flow passage length L of second adsorbent chamber 13 from terminal section C to terminal section D. In details, the measurement point described above is positioned in a range at least 5 mm remote from terminal section D within 30 percents of flow passage length L2 from terminal section D. A specific example of the measurement point is set at a position of 20 percent of flow passage length L2 from terminal section D.

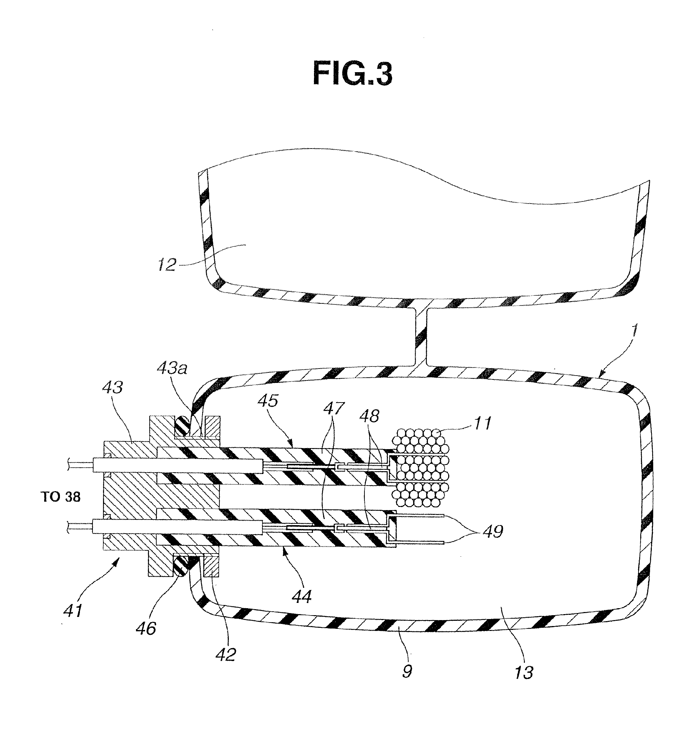

Fig. 3 shows a specific example of adsorption quantity sensor 41. This adsorption quantity sensor 41 generally includes a plug section 43 in a substantially column shape tightened via a nut 42 at the opening section installed on first cylindrical section 7 of casing 1 and a thermal capacity sensor section 44 and a temperature sensor section 45 supported on this plug section 43. Above-described plug section 43 includes a screw section 43a to which nut 42 is meshed and an O ring 46 is intervened between an outer wall surface section of first cylindrical section 7 and screw section 43a.

Above-described thermal capacity sensor section 44 and temperature sensor section 45 have substantially the same structure. A temperature sensitive element 48 such as a thermister is buried into the tip section of a bar shaped insulator 47 supported on plug section 43,
Then, a pair of heat transfer plates 49 are projected from a tip of an insulating body 47 to transfer a heat from adjacent adsorbent 11 to temperature sensitive element 48 (a heat absorption at thermal capacity section 44). Each of the pair of heat transfer plates 49 is made of an aluminum alloy having a high transmission rate as the detection section. Temperature sensitive element 48 has a characteristic such that a resistance value thereof is varied according to the temperature of the thermal capacity sensor 44 itself along with the heat generation by means of the power supply. In thermal capacity sensor section 44, the heat is deprived of in accordance with the adsorption quantity (support quantity) of hydrocarbon in adsorbent material in a state where temperature sensitive element 43 is heated according to the power supply. Hence, a thermal equilibrium is changed so that an output is obtained in accordance with the thermal capacity (adsorption quantity) via the detection circuit within engine control unit 38. Temperature sensor section 45 is prepared for a temperature compensation purpose and serves to compensate for a variation of output due to the change in temperature in the inside of canister 1 which is relatively largely varied due to endothermic reaction and exothermic reaction.

In the above-described structure, the position of the pair of heat transfer plates 49 of thermal capacity sensor section 44 provides the substantial measurement point. This measurement point is positioned at a substantial center of a lateral cross sectional surface forming a substantially rectangular shape as shown in Fig. 3.
It should be noted that, as shown in Figs. 1 and 2, thermal capacity sensor section 44 and temperature sensor section 45 are arranged at the substantially same position as each other with respect to the elongate direction of the gas flow passage. The pair of heat transfer plates 49 have a width of several millimeters or more in a vertical direction of Fig. 2 and its center can be deemed to be the measurement point. However, as an interval from the pair of heat transfer plates 49 to terminal section D, it is desirable for a distance between a side edge 49a of one of the pair of heat transfer plates 49 directed toward terminal section D of heat transfer plates 49 and fifth screen member 22 to be equal to or more (longer) than 5mm in order to avoid a thermal influence from an external.

Adsorption quantity sensor 41 is arranged as described above and it is possible to grasp the adsorption quantity of the whole canister 1 with a high accuracy by means of this single adsorption quantity sensor 41.

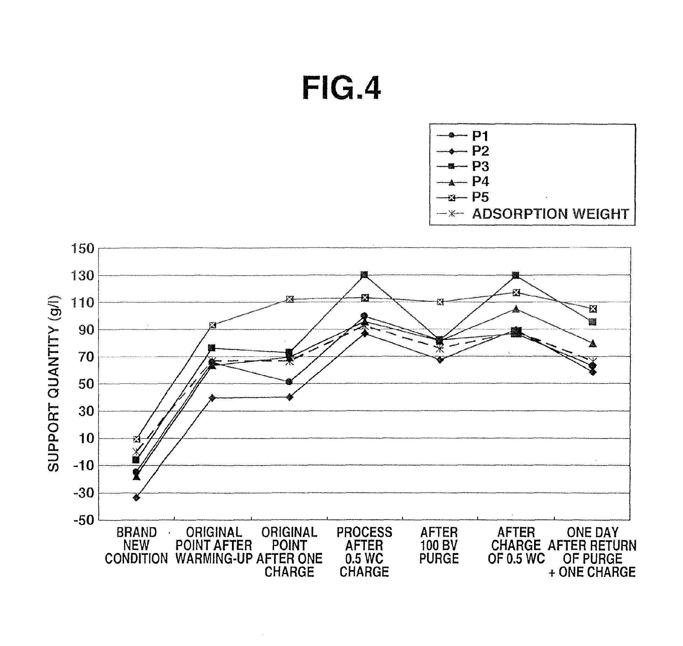

Fig. 4 shows a result of an experiment in which adsorption quantity sensor 41 is arranged at five measurement points of P1 through P5 and whether the measurements of the respective measurement points are correctly correlated to the adsorption quantity of canister 1, In this result, processes of a charge by means of a predetermined hydrocarbon in canister 1 and a purge by means of the ventilation of the air are carried out as denoted by the lateral axis and the output values of adsorption quantity sensor 41 are plotted. It should be noted that " a support quantity " denoted in a dotted line represents a measurement of a weight variation of whole canister 1 along with the charge and purge and represents the adsorption quantity of whole canister 1 (the adsorption quantity per unit volume in details).

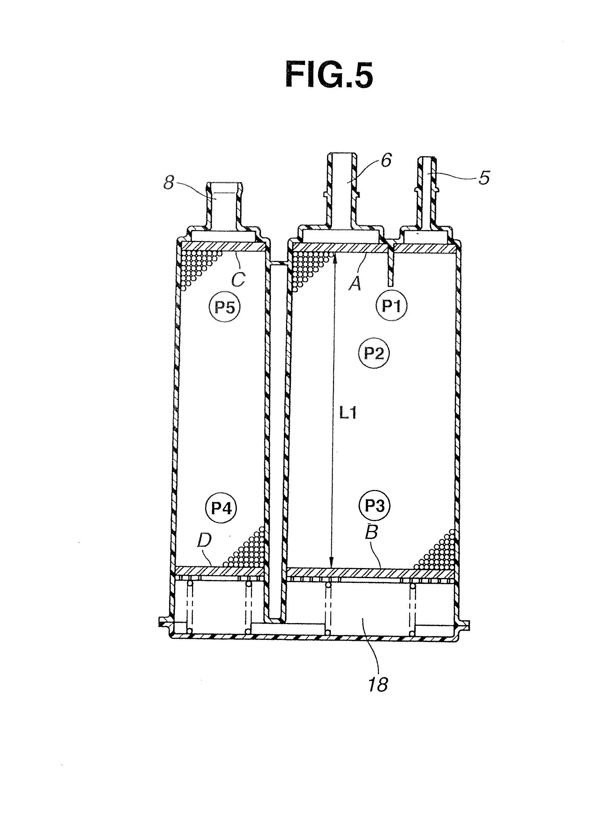

A point P4 in Fig. 5 corresponds to the measurement point of adsorption quantity sensor 41 in the above-described embodiment. Points P1 through P3 are examples of the measurement points in a case where the adsorption quantity sensor 41 is arranged at first adsorbent chamber 12. Point P1 is a point placed in the vicinity to a directly under position of partitioning wall 16 projected toward first adsorbent chamber 12. Point P2 is a point present within a region toward terminal section A more than the intermediate point and remote from terminal section A more than point P1 from among flow passage length L1 of first adsorbent chamber 12 from terminal section A to terminal section B. Point P3 is a point nearer to the terminal section B than the intermediate point in flow length L1 of first adsorbent chamber 12 from terminal A to terminal B and placed at the point corresponding to 20 percents of flow passage length L1 in the same way as point P4. Point P5 is placed in a region nearer to terminal C than the intermediate point in flow passage length L2 of second adsorbent chamber 13 from terminal C to terminal D.
Point P5 is a point placed in the vicinity to a position corresponding to 20 percents of flow passage length L2 of second adsorbent chamber 13 from terminal section C to terminal section D.

As processes to represent the lateral axis of Fig. 4, a leftmost end is a state of a new article (brand new condition) after the assembly of canister 1 and, a stage in which, after a warming-up by repetitions of charge and purge several times from the brand new condition, a perfect charge is once carried out and a sufficient purge is carried out, is determined as original point after the warming-up. Next, the charge of 0.5 working capacity (0.5 WC) was carried out and , thereafter, the purge by the air ventilation by 100 times a bed volume (100BV), and, thereafter, the charge of 0.5 working capacity (0.5 WC) was again carried out. Then, at last, to return to the original point, the purge was carried out until " the original point after one charge " becomes equal to the weight of whole canister 1.

As shown in Fig. 4, the output value of adsorption quantity sensor 41 provided on point P4 corresponding to a measurement point position of adsorption quantity sensor 41 in the above-described embodiment is very relatively correlated to the adsorption quantity of whole canister 1 denoted in the dot line. As compared with this, the output value of adsorption quantity sensor 41 at point P5 near to drain port 8 is hardly reflected on the change in the adsorption quantity of whole canister 1 denoted by the broken line and indicates the high value as a whole.
The adsorption quantity of adsorbents 11 in the vicinity to point P5 should be a least adsorption quantity according to the distribution along the elongated direction of the flow passage of canister 1 and the output value of point P5 indicates apparently a low reliability. It can be thought that this is because moisture in the atmosphere caused to flow from drain port 8 is adsorbed onto adsorbents 11. In the same way, the output value at point P3 indicates a high value than whole canister 1 and has a low reliability. It can be thought that this is because this is affected by moisture condensed in connection passage 8.

However, as described hereinbefore, under a situation such that the fuel component is abruptly caused to flow into canister 1, the fuel component is first introduced within first adsorbent chamber 12 so that a quick charge within first adsorbent chamber 12 is carried out. Whereas, the fuel component is caused to be flowed after the passage from first adsorbent chamber 12 to connection passage 18. Then, since the lateral cross sectional area of second adsorbent chamber 13 is smaller than the lateral cross sectional area of first adsorbent chamber 12, a distribution of the adsorption quantity at the lateral cross section is relatively uniform. Hence, as compared with point P1 and point P2, an influence of a charge speed is not received at point P4 so that the reliability of the output value at point P4 gives high.

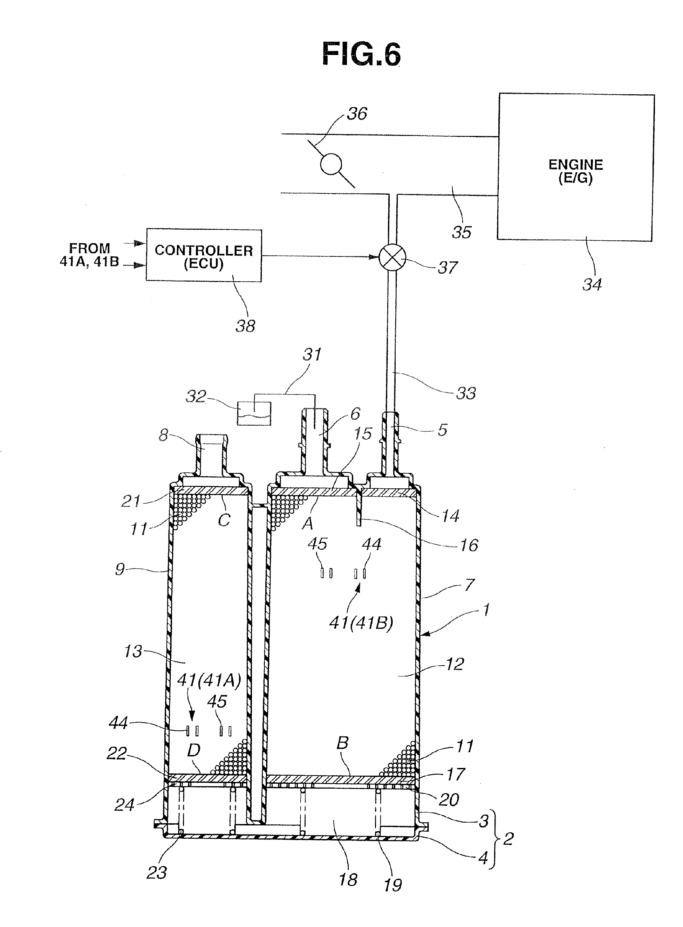

Fig. 6 shows a second preferred embodiment on which two adsorption quantity sensors 41, 41 (41A, 41B) are disposed on canister 1.
First adsorption quantity sensors 41 denoted by a reference sign of 41A is disposed at the same position as the above-described first embodiment. Second absorbent quantity sensor 41 denoted by the reference sign of 41B is disposed at first adsorbent chamber 12 side and has measurement points of P1 and P2 in Fig. 5.
As described above, if two adsorption quantity sensors 41, 41 are used, the adsorption state in canister 1 can be grasped in more details.
For example, while the output value of first adsorption quantity sensor 41A is used as representing the adsorption quantity of whole canister 1, the output value of second adsorption quantity sensor 41B can be used to represent the adsorption quantity in the vicinity to purge port 5 which affects a concentration in a purge gas outputted to engine 3. Or alternatively, each of first adsorption quantity sensors 41A, 41B can be handled as individually representing the adsorption quantities of first and second adsorbent chambers 12, 13.

This application is based on a prior Japanese Patent Application No. 2012-139303 filed in Japan on June 21, 2012. The entire contents of this Japanese Patent Application No. 2012-139303 are hereby incorporated by reference. Although the invention has been described above by reference to certain embodiments of the invention, the invention is not limited to the embodiment described above. Modifications and variations of the embodiments described above will occur to those skilled in the art in light of the above teachings. The scope of the invention is defined with reference to the following claims.

## Claims

1. A canister comprising:
a first adsorbent chamber;
a second absorbent chamber connected to the first adsorbent chamber via a connection passage to constitute a U turn shaped flow passage;
a casing having a charge port and a purge port at a terminal section of the first adsorbent chamber and having a drain port at a terminal section of the second adsorbent chamber;
an adsorbent filled within the first and second adsorbent chambers; and
an adsorption quantity sensor attached onto the casing to position a detection section of the sensor within the adsorbent, wherein a measurement point of the adsorption quantity sensor is arranged at a position nearer to a second terminal section of the second adsorbent chamber than an intermediate point of a flow passage length between a first terminal section at a drain port side of the second adsorbent chamber and the second terminal section thereof at the connection passage side.

2. The canister as claimed in claim 1, wherein the measurement point is arranged at the position within 30 percents of the flow passage length from the second terminal section.

3. The canister as claimed in either claim 1 or 2, wherein the detection section of the adsorption quantity sensor is at least 5mm separate from a screen member having a ventilation characteristic and defining the second terminal section.

4. The canister as claimed in any one of the preceding claims 1 through 3, wherein the canister further comprises a second adsorption quantity sensor disposed within the first adsorbent chamber and a measurement point of the second adsorption quantity sensor is disposed at a position nearer to the first terminal section of the first adsorbent chamber than an intermediate point of the flow passage length between a first terminal section of the charge port side of the first adsorbent chamber and the second terminal section at the connection passage side.

5. The canister as claimed in any one of the preceding claims 1 through 4, wherein a lateral cross sectional area of the second adsorbent chamber is smaller than the lateral cross sectional area of the first adsorbent chamber.

6. The canister as claimed in any one of the preceding claims 1 through 5, wherein the adsorption quantity sensor comprises: a plug section of a cylindrical shape and fixed onto an opening section of a cylindrical section of the casing; a thermal capacity sensor section supported on the plug section; and a temperature sensor section having the same structure as the thermal capacity sensor section.

7. The canister as claimed in any one of the preceding claims 1 through 6, wherein the temperature sensor section comprises: a bar shaped insulating body supported on the plug section; a temperature sensitive element buried at a tip section of the insulating body; and a pair of heat transfer plates projected from a tip of the insulating body to transfer a heat from the adsorbent to the temperature sensitive element to act in a form of the detection section of the adsorption quantity sensor.

8. The canister as claimed in any one of the preceding claims 1 through 7, wherein the temperature sensor section has a characteristic such that heat is generated when a power is supplied to the temperature sensitive element and a resistance value of the temperature sensor is varied in accordance with the temperature of the temperature sensor itself.

9. The canister as claimed in any one of the preceding claims 1 through 8, wherein the thermal capacity sensor section outputs a signal in accordance with the thermal capacity which is equal to the adsorption quantity in the adsorbent in a state in which the temperature sensitive element is heated by the supply of power to the temperature sensitive element.

10. The canister as claimed in any one of the preceding claims 1 through 9, wherein the position of the pair of heat transfer plates of the thermal capacity sensor section provides the measurement point.

11. The canister as claimed in any one of the preceding claims 1 through 10, wherein the thermal capacity sensor section and the temperature sensor section are juxtaposed at the same position with respect to an elongate direction of a gas flow passage of the second adsorbent chamber.

12. The canister as claimed in any one of the preceding claims 1 through 11, wherein the pair of heat transfer plates have a predetermined width, a center of the predetermined width of the pair of heat transfer plates provides the measurement point, and a distance between a side edge of one of the pair of heat transfer plates nearer to the second terminal section of the second adsorbent chamber and a screen member defining the second terminal section is equal to or longer than 5 mm.
